(19)

Europäisches
Patentamt
European
Patent Office
Office européen
des brevets

(11) **EP 3 547 076 A1**

(12) **EUROPEAN PATENT APPLICATION**

(43) Date of publication:
**02.10.2019 Bulletin 2019/40**

(51) Int Cl.:
*G06F 1/20* (2006.01)    *G06F 1/32* (2019.01)

(21) Application number: **18164554.0**

(22) Date of filing: **28.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Advanced Digital Broadcast S.A.**
**1262 Eysins (CH)**

(72) Inventor: **Hrebie , Maciej**
**65-119 Zielona Gora (PL)**

(74) Representative: **Blonski, Pawel**
**Advanced Digital Broadcast Polska**
**Ul. Trasa Polnocna 16**
**65-119 Zielona Gora (PL)**

(54) **SYSTEM AND METHOD FOR ADJUSTING PERFORMANCE OF COMPONENTS OF A MULTI-COMPONENT SYSTEM**

(57)    Method for adjusting performance of components of a multi-component system, the method comprising the steps of: reading temperature from said an at least one sensor in order to obtain a single, current temperature value Tc; determining a load factor of each component, the load factor being a ratio of idle to active time windows over time; checking whether the Tc is equal or greater than a warning temperature $T_W$ and whether the Tc is lower than a maximum temperature $T_{Max}$; in case the condition is met, scaling, for each component, the load factor by a scaling value depending on the Tc and Tw wherein if the Tc is lower than the Tw, the load factor is increased and otherwise it is decreased; mapping of the scaled load factor to the respective components' operating levels; changing the setting of operating level on each component.

Fig. 3A

## Description

### TECHNICAL FIELD

The present invention relates to a system and method for adjusting performance of components of a multi-component system. In particular the present invention relates to control of hardware components of a device in order to maximize performance of the complete system at given temperature constraints.

### BACKGROUND OF THE INVENTION

Prior art defines US 6,754,607 B2 entitled "Failure diagnosis method for control apparatus" discloses a control apparatus can monitor the internal temperature and ambient temperature of the control apparatus and save the appropriate information in the memory media of the control apparatus if the difference between the internal and external temperature exceeds the required temperature range. Even if the temperature gradient is too steep, the required information can be saved in the memory media of the control apparatus.

The method of '607 operates post factum, i.e. informs that a given system is or was overheated.

It would thus be advantageous to design a system, which would not allow such overheating to occur i.e. such management of different components, as well as adjusting their operational parameters, in order to prevent reaching a predefined threshold.

A publication of US 8,907,800 B2, entitled "Electronic apparatus and method of controlling electronic apparatus" discloses an electronic apparatus, which includes: a temperature measurement section that measures a temperature of a heat generation source generating heat by consuming power or a temperature of an inner position of a casing of which the temperature changes due to the heat generation of the heat generation source; and an environmental temperature calculation section that calculates a temperature which is calculated using a predetermined relational equation that is different in accordance with a model from a difference between a first temperature measured by the temperature measurement section at a point in time when the heat generation source starts consuming a predetermined amount of power and a second temperature measured by the temperature measurement section at a point in time after the passage of a predetermined period from the start of consumption of a predetermined amount of power by the heat generation source as an environmental temperature in an environment where the casing is placed.

A drawback of this solution is that the system is switched to a lower power mode after overheating has already occurred.

The aim of the development of the present invention is an improved system and method for adjusting performance of components of a multi-component system.

### SUMMARY AND OBJECTS OF THE PRESENT INVENTION

An object of the present invention is a method for adjusting performance of components of a multi-component system, the method comprising the step of: reading temperature from said an at least one sensor in order to obtain a single, current temperature value $T_C$; determining a load factor of each component of the system, the load factor being calculated as a number of time windows having at least one processing activity divided by the total number of time windows in a monitored period; checking whether the current temperature $T_C$ is equal or greater than a warning temperature $T_W$ and whether the current temperature Tc is lower than a maximum temperature $T_{Max}$; in case the condition is met, scaling, for each component, the load factor by a scaling value depending on the $T_C$ and $T_W$ wherein if the $T_C$ is lower than the $T_W$, the load factor is increased and otherwise it is decreased; mapping of the scaled load factor, for each component, to the respective components' operating levels; changing the setting of operating level on each component.

Preferably, in case said condition has not been met: verifying whether $T_C \geq T_{Max}$ and in case $T_{Max}$ has been reached, initiating maximum resources idling until the current temperature $T_C$ has fallen below the warning temperature $T_W$; and resuming operation of the system components; and returning to said step of mapping.

Preferably, the method further comprises a step of filtering, the scaled load factors, by filtration and smoothing function in order to determine the current settings of operating levels for each component.

Preferably, the method further comprises a step of introducing a delay before executing another iteration of the method.

Preferably, the delay is a multiplication of the time window.

Preferably, the delay depends on a difference between the current temperature $T_C$ and the warning temperature Tw such that the lower the Tc and the greater the difference between $T_C$ and $T_W$, the longer the delay.

Preferably, the delay is decreased once the system enters the $T_W$ zone.

Preferably, the load factor is expressed by a percentage value or a value from a range of 0 to 1.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

Lastly, a system implementing the aforementioned method has also been presented.

## BRIEF DESCRIPTION OF THE DRAWINGS

These and other objects of the invention presented herein, are accomplished by providing a system and method for adjusting performance of components of a multi-component system. Further details and features of the present invention, its nature and various advantages will become more apparent from the following detailed description of the preferred embodiments shown in a drawing, in which:

Fig. 1A - 1B present a diagram of the method according to the present invention;

Fig. 2A show a process of calculating load coefficient for each component;

Fig. 2B presents load decreasing of each component by a scaling factor;

Fig. 2C depicts application of an operating level of a component if its current setting differs from the level to be applied;

Fig. 3A presents a first example of a multi-component system;

Fig. 3B presents a second example of a multi-component system;

Fig. 3C shows the central processing unit;

Fig. 3D depicts content of the memory;

Fig. 4A presents an example of a chart and a temperature waveform during a low load operating period;

Fig. 4B shows an example of a chart and a temperature waveform during a high load operating period and operating in an alarm zone;

Fig. 4C depicts an example of a chart and a temperature waveform in case of reaching a maximum temperature;

Fig. 5 shows an example of mapping of load factors Ld into real operating levels; and

Fig. 6 presents a method for calculating current setting of operating levels for the N hardware components.

## NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

## DESCRIPTION OF EMBODIMENTS

The system and method according to the present invention make the following assumptions. First, a controller device comprises at least two, but preferably a plurality of, components. Each of said components may selectively operate on one of at least two levels having different power requirements and thus resulting in different heat generation amount.

For the purpose of the present method, it is assumed that a said levels are identified by a variable having a range from 0 to 1, wherein 0 is the lowest processing power (and lowest heat generation) level while 1 is the highest processing power (and the highest heat generation) level. Other values may be mapped to other levels depending on the count of said levels.

For example, in case of three levels a range 0 - 0,25 may be assigned to a low power consumption level (and correspondingly low performance), a range of 0,26 - 0,75 may be assigned to a middle power consumption level while the range of 0,76 - 1 (or above 0,75 in general) may be assigned to a high power consumption level.

Subsequently, there may optionally be used order to avoid a thrashing effect by filtration and smoothing function to determine the current settings of operating levels for each hardware component.

The system, comprises at least one temperature sensor, preferably located in such a place that reports current operating temperature of the device. In case of a plurality of sensors, their reading may be averaged as Tc.

For each component of the system, there exists a possibility of monitoring its load in terms of currently executed tasks. In a simpler form only and idle and active states may be signaled.

The system, further comprises a predefined maximum temperature that not allowed to be reached $T_{Max}$. Additionally, there may be defined an alarm temperature $T_W$ such that $T_W < T_{Max}$. An alarm zone $[T_W, T_{Max}]$ is an increased temperature zone, in which steps must be taken in order to stop temperature increase or reduce the temperature. A temperature above $T_{Max}$ results in critical condition, in which the system must be shut down or at least put into a sleep mode.

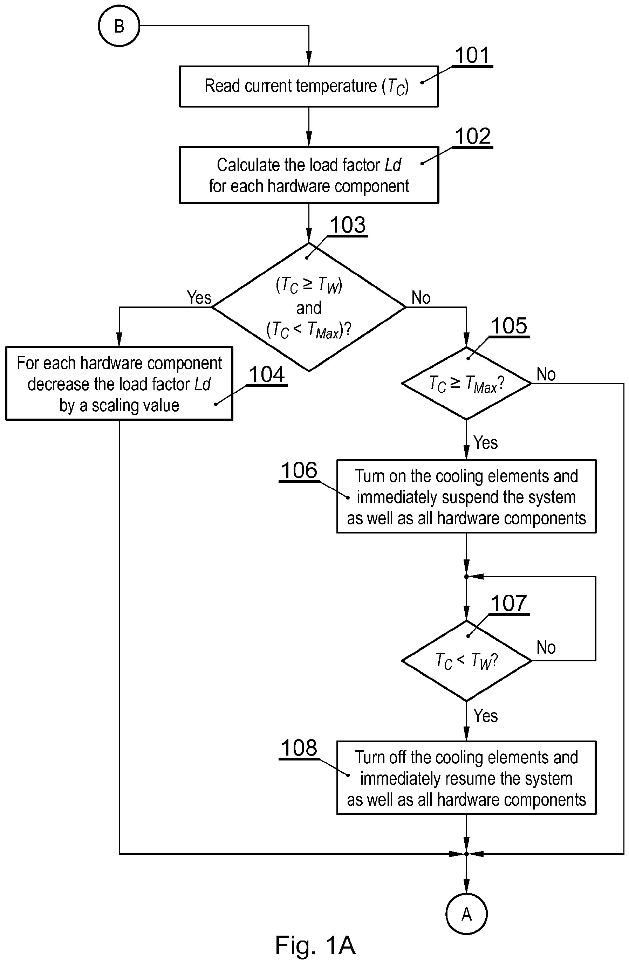

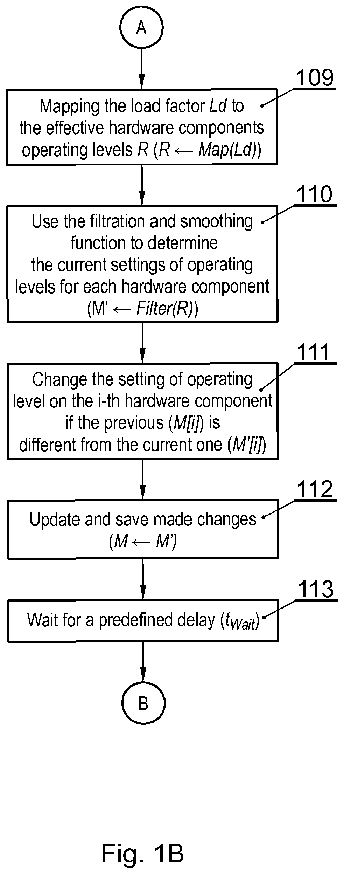

Fig. 1A - 1B present a diagram of the method according to the present invention. The method starts at step (101) from reading temperature from said at least one sensor in order to obtain a single temperature value Tc.

Subsequently, at step (102) there is determined a load of the components of the system i.e. a ratio of idle to active time windows over time. The concept of an activity in a time window, per component, is preferably a true/false flag, meaning that a given time window (for example expressed in seconds) is assigned either an idle or an active state (when at least one activity was executed on a given component).

Preferably, the load coefficient is expressed by a percentage value or a value from a range of 0 to 1 in general. In order to obtain such load factor a number of time windows having an active state may be divided by the total number of time windows in a monitored period (active_time windows / total_time windows).

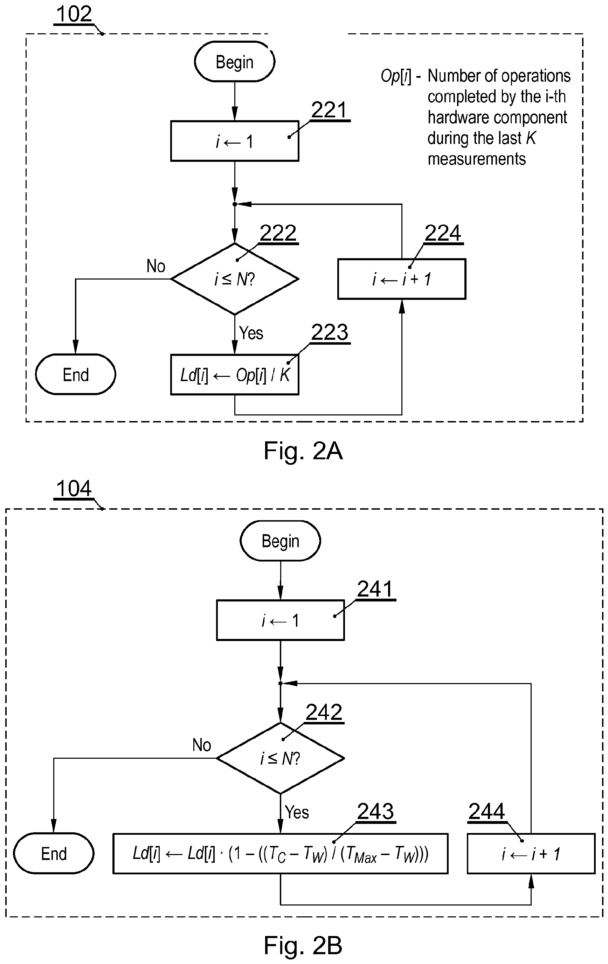

The determination of the load coefficient of the components of the system may be executed as shown in Fig. 2A. The process essentially comprises a loop (221 - 224) over N components of the system (222), wherein for each component i there is determined the load coefficient over K time windows (223).

At step (103) it is checked whether current temperature $T_c$ is equal or greater than $T_W$ and whether $T_C$ is lower than $T_{Max}$. In case the condition is met, the process advances to step (104) where for each hardware component there is scaled the load coefficient/factor Ld by a scaling value.

Details of this process have been presented in Fig. 2B. The process essentially comprises a loop (241 - 244) over N components of the system (242), wherein for each component i there is executed scaling of the Ld by a coefficient calculated on the basis of the three temperature values previously described. The applied equation may be as follows:

$$ Ld[i] \leftarrow Ld[i] \cdot (1 - ((T_C - T_W) / (T_{Max} - T_W))) $$

This means that in case $T_C$ is lower than $T_W$, the operating level (load factor) may be increased and otherwise it will be decreased. The amount of increase/decrease results from the equation. The output of the equation will in turn be communicated to respective components and mapped to an operating level depending on in which range it falls in (for example as per the case above defining 3 operating levels and respective ranges).

Returning to Fig. 1A, at step (105), in case the condition of step (103) is met, the system verifies whether $T_C \geq T_{Max}$. In case $T_{Max}$ has been reached, at step (106) the system initiates maximum resources idling and maximum cooling if available. In some cases the system may enter sleep mode or suspend hardware components.

Otherwise, if the condition of step (105) is not met, the process advances to point (A).

The state entered at step (106) remains valid until a condition of step (107) has been met, meaning that the current temperature falls below the warning temperature. When it does, at step (108) the process reduces cooling (possibly switches cooling off if allowed at given system condition) and resumes operation of the system components.

Next, at step (109), there is executed mapping of the scaled load factor Ld to the respective hardware components operating levels R (R ← Map(Ld)). For example, a scaled load factor Ld value of 0,15 will be mapped to the lowest operating level in the 3-level example given above.

Subsequently, at step (110), there may optionally be used a filter in order to avoid thrashing effect by applying filtration and smoothing function to determine the current settings of operating levels for each hardware component (M' ← Filter(R)). For example, a moving average of a low-pass filer may be applied in case of a HDD motor, which should not be stopped and started very frequently as it may decrease its overall lifespan.

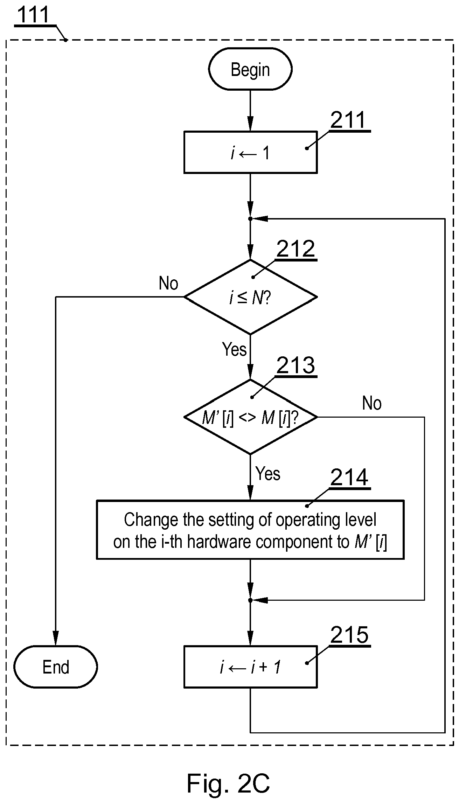

Next, at step (111), the system changes the setting of operating level on the i-th hardware component if the previous (M[i]) is different from the current one (M'[i]). This is executed for each component in a loop (211 - 215), as shown in Fig. 2C.

At step (112) the system stores information on current operating levels of each component for later reference, when system operating conditions change.

Lastly, optionally, the system may introduce a delay (113) before executing another iteration of the presented method. The delay may be a multiplication of the time window referenced above or may depend on a difference between the current temperature and the warning temperature i.e. the lower the $T_C$ and the greater the difference between $T_C$ and $T_W$, the longer the delay. The delay may be decreased once the system enters the $T_W$ zone.

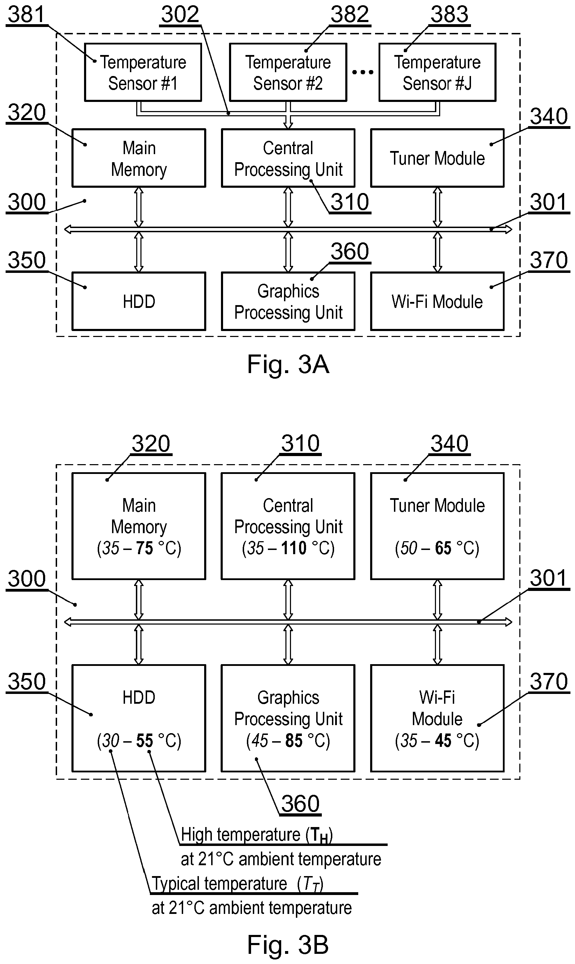

Fig. 3A presents a first example of a multi-component system (300) comprising distinct hardware modules (320, 310, 340, 350, 360, 370). At least one temperature sensor (381, 382, 383) may be positioned within the chassis. The temperature readings may be transmitted to a CPU (310) using a suitable direct wiring or a communication bus (301). The temperature readings are processed by the CPU (310), for example by calculating an average value, into a representative Tc value used during further data processing.

Fig. 3B presents a second example of a multi-component system (300) comprising distinct hardware modules (320, 310, 340, 350, 360, 370). Each component may comprise a temperature sensor as well as assigned its typical operating temperature $T_T$ and a high temperature $T_H$. The temperature readings may be transmitted to a CPU (310) using a suitable direct wiring or a communication bus (301). The temperature readings are processed by the CPU (310), for example by calculating an average value, into a representative Tc value used during further data processing.

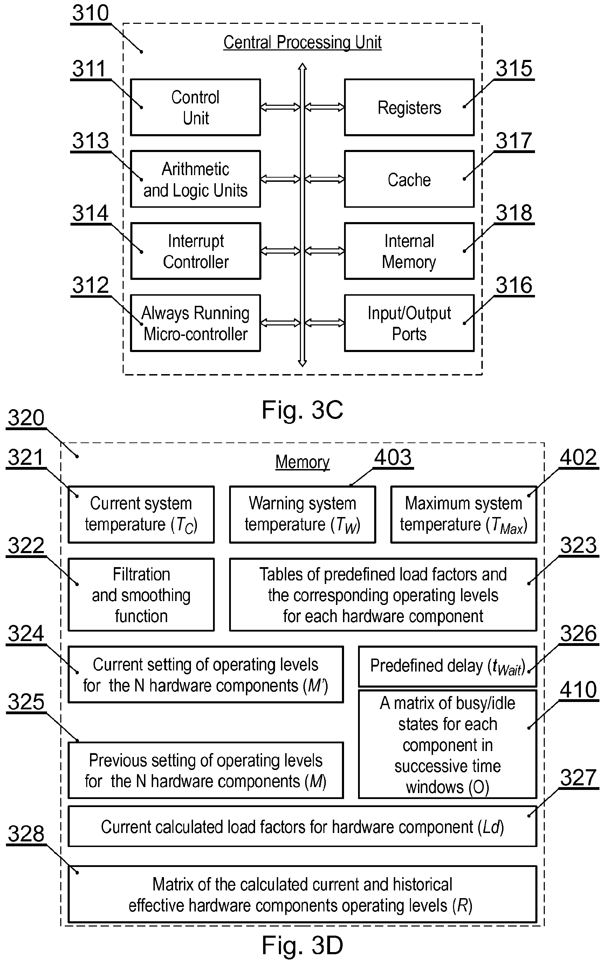

Fig. 3C shows the central processing unit (310). The respective units of the CPU (310) preferably communicate over an internal data bus. An always running micro-controller (312) executes a process relevant for step (107) i.e. awaiting for a predefined temperature decrease. Step (106) stops all components except for the always running micro-controller (312), which is configured to resume operation of the remaining components when the condition of step (107) has been met. To this end, the always running micro-controller (312) shall have access to the I/O ports (316) via which respective temperature sensor(s) provide their data.

Further, the central processing unit (310) comprises input/output ports (316) via which the CPU (310) may communicate with external devices as well as with the temperature sensors (381 - 383).

Other, typical components of the CPU may include a control unit (311) an arithmetic and logic unit (313), cache (317), registers (315) as well as internal memory for storing temporary data (318).

Fig. 3D depicts content of the memory (320), comprising parameters of the system. Three temperature-related variables define current (321), warning (403) and maximum (402) temperatures.

A filtration and smoothing function is defined (322) as well as the predefined delay (326). Tables of predefined load factors ranges and the corresponding operating levels for each hardware component (323) are also stored in memory as explained previously, certain ranges of Ld (which may have been scaled) are assigned to operating levels.

Additionally, current settings of operating levels for the N hardware components (M') are stored in memory (324) as well as the previous settings of operating levels for the N hardware components (M) (325).

Section (327) stores current calculated load factors for each hardware component (Ld), which may be mapped to certain operating level using the correspondence defined in section (232).

Section (328) stores a Matrix of the calculated current and historical effective hardware components' operating levels (R). Lastly, section (410) comprises a matrix of busy/idle states for each component in successive time windows.

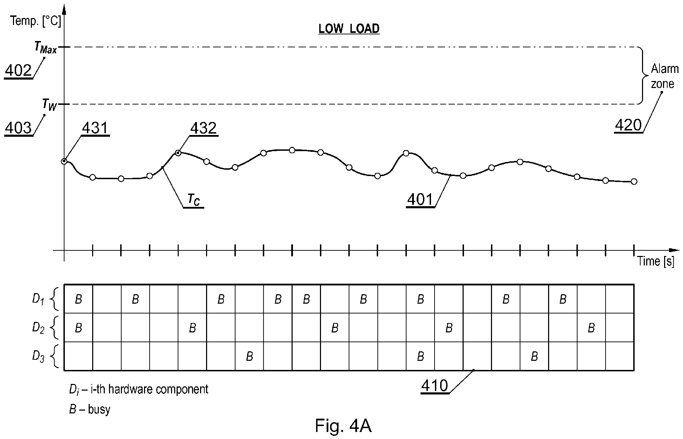

Fig. 4A presents an example of a chart and a temperature waveform during a low load operating period. A curve (401) defines changes of current temperature in time Tc while the level (402) is the maximum allowed temperature $T_{Max}$.

The start of an alarm zone (420) is determined by the $T_W$ temperature (403), while a components' load in time is depicted by a matrix (410) listing respective time windows as busy/idle states of components $D_i$.

Items (431, 432) mark selected measurements of current temperature by the respective sensor(s).

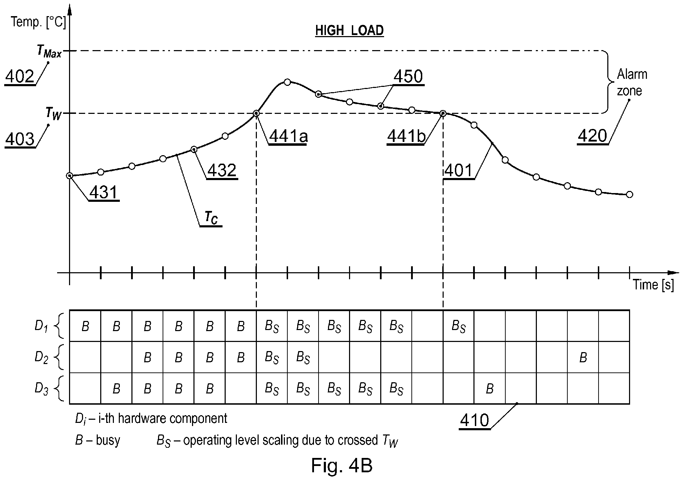

Similarly, Fig. 4B shows an example of a chart and a temperature waveform during a high load operating period and operating in an alarm zone. In this case, the current temperature is in the alarm zone between points (441a) and (441b). As may be readily seen, in this zone, the respective operating levels of the hardware components are scaled ($B_S$) in order to address the increased temperature.

Items (450) denote measurements points within the alarm zone (420).

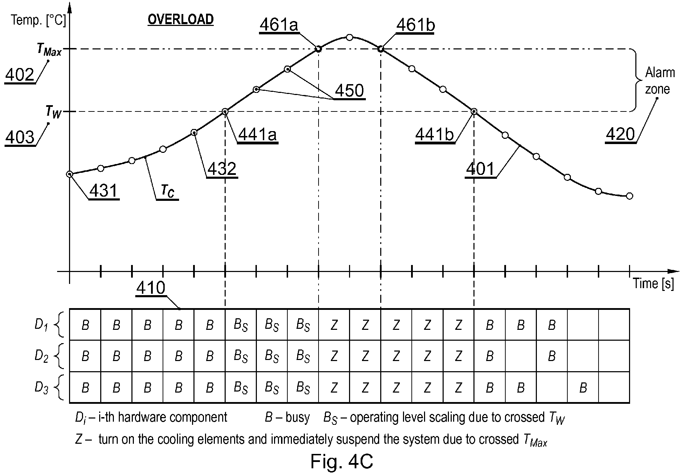

In turn, Fig. 4C depicts an example of a chart and a temperature waveform in case of reaching a maximum temperature. A point (461a) denotes a point when temperature rises above $T_{Max}$ and point (461b) denotes a point in time when the current temperature lowers to the $T_{Max}$ and further decreases due to the fact that system components are suspended (Z), which remain suspended till (441b).

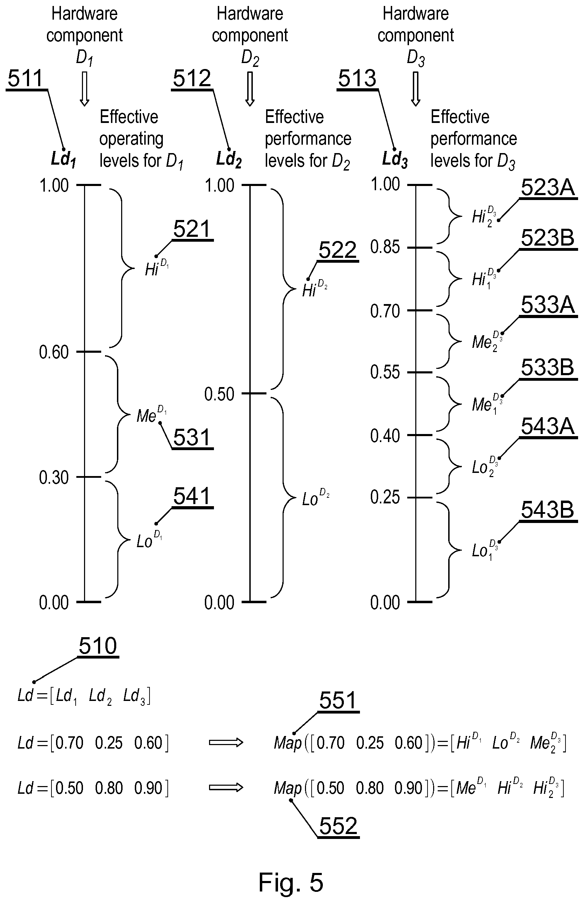

Fig. 5 shows an example of mapping of load factors Ld, possibly scaled in case the load takes place in the alarm zone, into real operating levels, which may be applied on a component in order to decrease or increase its performance.

The system comprises a vector comprising coefficients of load (510) calculated at step (102) for each component $D_i$. These load factors (511, 512, 513) will be mapped to real operating levels that may be applied to a given component and thereby affect its operating condition. Items (521, 531, 541) shown possible settings of operating levels, for the hardware component $D_1$ de-

pending on the load factor Ld. In this case a load factor in a range of 0.00 to 0.30 (521) denotes a low operating mode, a load factor above 0.30 up to 0.60 (531) denotes a medium operating level while a load factor above 0.60 and up to 1.00 (541) denotes a high operating level. Similar operating levels have been set for component D2 (522) and $D_3$ (523A-B, 533A-B, 543A-B).

The mapping of a load factor into an operating level may be applied using a mapping function as shown by items (551, 552).

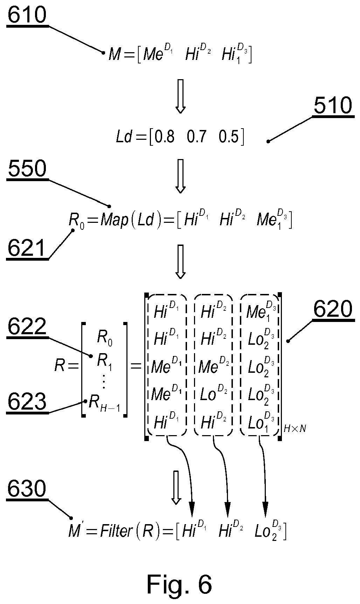

Fig. 6 presents a method for calculating current setting of operating levels for the N hardware components (M') by taking into account a history of recently calculated operating settings as well as the recent operating level (M) of the respective components (after filtering has been applied).

Item (610) is an example of a previous state of operating levels of the respective components $D_1$-$D_3$.

A mapping function (550), maps load factors to real operating levels of respective components according to predefined assumptions as per Fig. 5 i.e. into the $R_0$ (621) vector.

The matrix (620) comprises a vector of current, calculated operating levels of components as well as vectors of such operating levels calculated for the most recent H-1 iterations of the process.

Item (622) denotes operating levels of components that were determined in the preceding iteration of the process, while item (623) denotes operating levels of components that were determined in the H-1 iteration of the process. It may be the case that a value of H is variable depending on the operating zone (e.g. alarm zone or not).

Item (630) is a result of filtering the matrix R by a smoothing filer (may operate on columns only or take into account other items of the matrix) determining operating levels of the components in the current step of the process (i.e M' required at step (213) and (214)).

The present invention prevents overheating of hardware components. Therefore, the invention provides a useful, concrete and tangible result. The invention is also applicable in a hardware system using temperature sensors in order to control respective hardware components of the system according to the presented method. Thus, the machine or transformation test is fulfilled and that the idea is not abstract.

At least parts of the methods according to the invention may be computer implemented. Accordingly, the present invention may take the form of an entirely hardware embodiment, or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for adjusting performance of components of a multi-component system may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. Method for adjusting performance of components of a multi-component system, the method being **characterized in that** it comprises the step of:

> • reading (101) temperature from said an at least one sensor in order to obtain a single, current temperature value $T_C$;
> • determining (102) a load factor of each component of the system, the load factor being calculated as a number of time windows having at least one processing activity divided by the total number of time windows in a monitored period;
> • checking (103) whether the current temperature Tc is equal or greater than a warning temperature $T_W$ and whether the current temperature $T_C$ is lower than a maximum temperature $T_{Max}$;
> • in case the condition is met, scaling, for each component (104), the load factor by a scaling value depending on the Tc and Tw wherein if the Tc is lower than the $T_W$, the load factor is increased and otherwise it is decreased;
> • mapping (109) of the scaled load factor, for each component (104), to the respective components' operating levels;
> • changing (111) the setting of operating level on each component (104).

2. The method according to claim 1 wherein in case said condition has not been met:

   • verifying (105) whether $T_C \geq T_{Max}$ and in case $T_{Max}$ has been reached, (106) initiating maximum resources idling until (107) the current temperature $T_C$ has fallen below the warning temperature $T_W$; and
   • resuming operation of the system components; and
   • returning to said step of mapping (109).

3. The method according to claim 1 wherein the method further comprises a step of filtering (110), the scaled load factors, by filtration and smoothing function in order to determine the current settings of operating levels for each component (104).

4. The method according to claim 1 wherein the method further comprises a step of introducing a delay (113) before executing another iteration of the method.

5. The method according to claim 4 wherein the delay is a multiplication of the time window.

6. The method according to claim 4 wherein the delay depends on a difference between the current temperature $T_C$ and the warning temperature $T_W$ such that the lower the $T_c$ and the greater the difference between $T_C$ and $T_W$, the longer the delay.

7. The method according to claim 6 wherein the delay is decreased once the system enters the $T_w$ zone.

8. The method according to claim 1 wherein the load factor is expressed by a percentage value or a value from a range of 0 to 1.

9. A computer program comprising program code means for performing all the steps of the computer-implemented method according to claim 1 when said program is run on a computer.

10. A computer readable medium storing computer-executable instructions performing all the steps of the computer-implemented method according to claim 1 when executed on a computer.

11. System for adjusting performance of components of a multi-component system (300) comprising:

    • distinct hardware component (320, 310, 340, 350, 360, 370);
    • at least one temperature sensor (381, 382, 383);
    • wherein the temperature readings are be transmitted to a controller (310);

the system being **characterized in that**

    • said controller (310) is configured to execute all the steps of the method of claim 1.

12. The system according to claim 11 wherein said at least one temperature sensor (381, 382, 383) is/are positioned within the chassis.

13. The system according to claim 11 wherein the temperature readings are processed by the controller (310) by calculating an average value, into a representative Tc value used during further data processing.

14. The system according to claim 11 wherein each hardware component (320, 310, 340, 350, 360, 370) comprises an associated temperature sensor (381, 382, 383).

**B**

101 Read current temperature ($T_C$)

102 Calculate the load factor $Ld$ for each hardware component

103 ($T_C \geq T_W$) and ($T_C < T_{Max}$)?

Yes

104 For each hardware component decrease the load factor $Ld$ by a scaling value

No

105 $T_C \geq T_{Max}$? — No

Yes

106 Turn on the cooling elements and immediately suspend the system as well as all hardware components

107 $T_C < T_W$? — No

Yes

108 Turn off the cooling elements and immediately resume the system as well as all hardware components

**A**

Fig. 1A

A

109

Mapping the load factor *Ld* to
the effective hardware components
operating levels *R* (*R* ← *Map(Ld)*)

110

Use the filtration and smoothing
function to determine
the current settings of operating
levels for each hardware component
(*M'* ← *Filter(R)*)

111

Change the setting of operating
level on the i-th hardware component
if the previous (*M[i]*) is
different from the current one (*M'[i]*)

112

Update and save made changes
(*M* ← *M'*)

113

Wait for a predefined delay (*t$_{Wait}$*)

B

Fig. 1B

Fig. 2A

Fig. 2B

Fig. 2C

381   302   382   383

Temperature Sensor #1

Temperature Sensor #2

· · ·

Temperature Sensor #J

320   340

Main Memory

Central Processing Unit

Tuner Module

300   310   301

350   360   370

HDD

Graphics Processing Unit

Wi-Fi Module

## Fig. 3A

320   310   340

Main Memory ($35 - 75$ °C)

Central Processing Unit ($35 - 110$ °C)

Tuner Module ($50 - 65$ °C)

300   301

350   370

HDD ($30 - 55$ °C)

Graphics Processing Unit ($45 - 85$ °C)

Wi-Fi Module ($35 - 45$ °C)

360

High temperature ($T_H$) at 21°C ambient temperature

Typical temperature ($T_T$) at 21°C ambient temperature

## Fig. 3B

310

Central Processing Unit

311
Control
Unit

315
Registers

313
Arithmetic
and Logic Units

317
Cache

314
Interrupt
Controller

318
Internal
Memory

312
Always Running
Micro-controller

316
Input/Output
Ports

Fig. 3C

320

Memory

321
Current system
temperature ($T_C$)

403
Warning system
temperature ($T_W$)

402
Maximum system
temperature ($T_{Max}$)

322
Filtration
and smoothing
function

323
Tables of predefined load factors and
the corresponding operating levels
for each hardware component

324
Current setting of operating levels
for the N hardware components ($M'$)

326
Predefined delay ($t_{Wait}$)

325
Previous setting of operating levels
for the N hardware components ($M$)

410
A matrix of busy/idle
states for each
component in
successive time
windows (O)

327
Current calculated load factors for hardware component ($Ld$)

328
Matrix of the calculated current and historical
effective hardware components operating levels ($R$)

Fig. 3D

Fig. 4A

Fig. 4B

$D_i$ – i-th hardware component

$B$ – busy     $B_S$ – operating level scaling due to crossed $T_W$

| $D_1$ | B | B | B | B | B | $B_S$ | $B_S$ | $B_S$ | Z | Z | Z | Z | Z | B | B | B | | |
|---|---|---|---|---|---|---|---|---|---|---|---|---|---|---|---|---|---|---|
| $D_2$ | B | B | B | B | B | $B_S$ | $B_S$ | $B_S$ | Z | Z | Z | Z | Z | B | | B | | |
| $D_3$ | B | B | B | B | B | $B_S$ | $B_S$ | $B_S$ | Z | Z | Z | Z | Z | B | B | | B | |

$D_i$ – i-th hardware component        $B$ – busy    $B_S$ – operating level scaling due to crossed $T_W$

$Z$ – turn on the cooling elements and immediately suspend the system due to crossed $T_{Max}$

Fig. 4C

Hardware
component
$D_1$

Hardware
component
$D_2$

Hardware
component
$D_3$

511

512

513

Effective
operating
levels for $D_1$

Effective
performance
levels for $D_2$

Effective
performance
levels for $D_3$

$Ld_1$

$Ld_2$

$Ld_3$

1.00

1.00

1.00

523A

$Hi_2^{D_3}$

521

522    0.85

523B

$Hi^{D_1}$

$Hi^{D_2}$

$Hi_1^{D_3}$

0.70

533A

$Me_2^{D_3}$

0.60

0.55

533B

$Me^{D_1}$

$Me_1^{D_3}$

531

0.50

0.40

543A

$Lo_2^{D_3}$

541

0.30

0.25

543B

$Lo^{D_1}$

$Lo^{D_2}$

$Lo_1^{D_3}$

0.00

0.00

0.00

510

$Ld = [\; Ld_1 \quad Ld_2 \quad Ld_3 \;]$

551

$Ld = [\; 0.70 \quad 0.25 \quad 0.60 \;]$   $\Longrightarrow$   $Map([\; 0.70 \quad 0.25 \quad 0.60 \;]) = [\; Hi^{D_1} \quad Lo^{D_2} \quad Me_2^{D_3} \;]$

$Ld = [\; 0.50 \quad 0.80 \quad 0.90 \;]$   $\Longrightarrow$   $Map([\; 0.50 \quad 0.80 \quad 0.90 \;]) = [\; Me^{D_1} \quad Hi^{D_2} \quad Hi_2^{D_3} \;]$

552

Fig. 5

610

$$M = \begin{bmatrix} Me^{D_1} & Hi^{D_2} & Hi_1^{D_3} \end{bmatrix}$$

$\Downarrow$

510

$$Ld = \begin{bmatrix} 0.8 & 0.7 & 0.5 \end{bmatrix}$$

550

$\Downarrow$

$$R_0 = Map(Ld) = \begin{bmatrix} Hi^{D_1} & Hi^{D_2} & Me_1^{D_3} \end{bmatrix}$$

621

$\Downarrow$

622

623

$$R = \begin{bmatrix} R_0 \\ R_1 \\ \vdots \\ R_{H-1} \end{bmatrix} = \begin{bmatrix} Hi^{D_1} & Hi^{D_2} & Me_1^{D_3} \\ Hi^{D_1} & Hi^{D_2} & Lo_2^{D_3} \\ Me^{D_1} & Me^{D_2} & Lo_2^{D_3} \\ Me^{D_1} & Lo^{D_2} & Lo_2^{D_3} \\ Hi^{D_1} & Hi^{D_2} & Lo_1^{D_3} \end{bmatrix}_{H \times N}$$

620

630

$\Downarrow$

$$M' = Filter(R) = \begin{bmatrix} Hi^{D_1} & Hi^{D_2} & Lo_2^{D_3} \end{bmatrix}$$

## Fig. 6

Europäisches
Patentamt

European
Patent Office

Office européen
des brevets

# EUROPEAN SEARCH REPORT

Application Number

EP 18 16 4554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 685 632 A2 (APPLE INC [US]) 15 January 2014 (2014-01-15) * abstract * * paragraph [0004] - paragraph [0007] * * paragraph [0016] - paragraph [0024]; figure 1 * * paragraph [0038] - paragraph [0043]; figure 4 * ----- | 1-14 | INV. G06F1/20 G06F1/32 |
| A | US 2012/271481 A1 (ANDERSON JON JAMES [US] ET AL) 25 October 2012 (2012-10-25) * abstract * * paragraph [0007] - paragraph [0009] * * paragraph [0039] - paragraph [0045]; figure 1 * * paragraph [0067] - paragraph [0098]; figure 7 * * paragraph [0106] - paragraph [0109]; figure 9 * * paragraph [0114] * ----- | 1-14 | |

TECHNICAL FIELDS
SEARCHED     (IPC)

G06F
G01K

The present search report has been drawn up for all claims

| Place of search | Date of completion of the search | Examiner |
|---|---|---|
| The Hague | 1 October 2018 | Malatesta, Lori |

EPO FORM 1503 03.82 (P04C01)

**EP 3 547 076 A1**

## ANNEX TO THE EUROPEAN SEARCH REPORT
## ON EUROPEAN PATENT APPLICATION NO.

EP 18 16 4554

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2018

| Patent document cited in search report | | | Publication date | Patent family member(s) | | | Publication date |
|---|---|---|---|---|---|---|---|
| EP 2685632 | A2 | | 15-01-2014 | BR | 102013015444 | A2 | 23-06-2015 |
| | | | | CN | 103514011 | A | 15-01-2014 |
| | | | | EP | 2685632 | A2 | 15-01-2014 |
| | | | | JP | 5638110 | B2 | 10-12-2014 |
| | | | | JP | 2014006905 | A | 16-01-2014 |
| | | | | KR | 20130143529 | A | 31-12-2013 |
| | | | | TW | 201407346 | A | 16-02-2014 |
| | | | | US | 2013345892 | A1 | 26-12-2013 |
| | | | | WO | 2013191816 | A1 | 27-12-2013 |
| US 2012271481 | A1 | | 25-10-2012 | CN | 103582857 | A | 12-02-2014 |
| | | | | EP | 2699977 | A2 | 26-02-2014 |
| | | | | JP | 6059204 | B2 | 11-01-2017 |
| | | | | JP | 2014516443 | A | 10-07-2014 |
| | | | | KR | 20140002072 | A | 07-01-2014 |
| | | | | US | 2012271481 | A1 | 25-10-2012 |
| | | | | WO | 2012145212 | A2 | 26-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6754607 B2

- US 8907800 B2